# EUROPÄISCHE PATENTANMELDUNG

(11) **EP 0 934 957 A1**
(43) Veröffentlichungstag der Anmeldung: **11.08.1999**
(21) Anmeldenummer: 99101424.2
(22) Anmeldetag: 27.01.1999
(51) Int. Cl.: C08F 36/04

(54) **Polymerisationsinitiierende geträgerte Systeme zur ionischen Polymerisation von konjugierten Dienen und zur Copolymerisation dieser mit weiteren Monomeren in Suspensions- oder Gasphasenverfahren**

(30) Priorität: 09.02.1998 DE 19805118
(71) Anmelder: Bayer Aktiengesellschaft, 51368 Leverkusen (DE)
(72) Erfinder: Dauben, Michael, Dr., 41468 Neuss (DE); Hoch, Martin, Dr., 42657 Solingen (DE); Oppenheimer-Stix, Christiane, Dr., 41468 Neuss (DE); Peter, Rolf, Dr., 41539 Dormagen (DE)

(57) **Zusammenfassung**

Die Anmeldung betrifft ein allgemein anwendbares Verfahren zur ionischen Polymerisation von Monomeren in Gasphasen- oder Suspensionsverfahren unter Einsatz geträgerter polymerisationsinitiierender Systeme bestehend aus
a) einer oder mehreren Komponenten, die eine ionische Polymerisation initiieren und starten,
b) einem Träger, auf den die polymerisationsinitiierende Komponente aufgebracht wird,
   und
c) gegebenenfalls einem oder mehreren Modifiern, die einen Einfluß auf die Reaktionskinetik und/ oder die Produkteigenschaften haben.

## Beschreibung

Der Homo- und Copolymerisation ein- oder mehrfach ungesättigter, auch konjugierter, Diene mit Hilfe ionischer Initiatoren kommt eine große industrielle Bedeutung zu. Aus umweltrelevanten Gründen und aufgrund wirtschaftlicher Überlegungen ist man bestrebt die angewandten Verfahren, in vielen Fällen Lösungsverfahren, zu optimieren oder durch neue Verfahren abzulösen. Dabei ist man bestrebt, die Polymerisation besagter Monomere in der Gasphase oder in Suspensions-Prozessen durchzuführen, da dabei zum einem in der Gasphase keine Lösungsmittel eingesetzt werden müssen und Emission und Abwasserbelastung verringert werden können und zum anderen in Suspensions- und Gasphasenverfahren die hergestellten Polymeren in vorteilhafter Form anfallen.

Zusätzlich kann man durch diese Verfahren neuartige Kautschuke mit besonderen Produkteigenschaften herstellen. Insbesondere erhält man im Polymeren besonders gut dispergierte Füllstoffe, wenn diese bei der Polymerisation als Träger der Aktivkomponente des Katalysators zugegen sind.

Es ist Stand der Technik (Encylcopedia of Polymer Science and Engineering, Vol. 2, S. 1 ff, Vol. 2, S. 729 ff und Vol. 13, S. 708 ff), ein- oder mehrfach ungesättigte Monomere mit Hilfe kationischer, anionischer oder radikalischer Initiatoren bzw. mit Hilfe von Systemen, die solche bilden können, in Polymere zu überführen. Diese Verfahren werden vorzugsweise in Lösungsprozessen verwirklicht, in welchen die besagten Initiatoren löslich sind und auf diese Weise möglichst effizient wirken.

Es ist in der wissenschaftlichen Literatur, beispielweise in Encyclopedia of Polymer Science and Engineering, Vol. 16, S. 76 f und Ullmanns Enzyklopädie der technischen Chemie, Band 13, S. 608 f, allgemein anerkannt, daß sich z. B. Butadien und Styrol sowohl für sich alleine als auch in Kombination mit Hilfe anionischer Initiatoren, vorteilhaft mit Lithium-organischen Verbindungen, polymerisieren lassen. Weiterhin ist allgemein bekannt (Ullmanns Enzyklopädie der technischen Chemie, Band 13, S. 621 ff), daß beispielsweise die Polymerisation von Isobuten mit Hilfe kationischer Initiatoren, vorteilhaft mit Mischungen von Lewis-Säuren, entsprechend der Lewis-Säure-Base-Theorie, und Wasser initiiert werden kann.

Aus EP-A-0798339 ist bekannt, daß die Copolymerisation von Butadien und Styrol beispielsweise durch ein System aus Organolithium-Verbindung, Kaliumalkoholat und Ether oder aminofunktionaler Verbindung in aliphatischen Lösungsmitteln initiiert und gesteuert werden kann.

Die beschriebenen Systeme besitzen den Nachteil, daß sie nur unter verhältnismäßig hohem Aufwand für Suspensions-Prozesse und nicht für Gasphasenverfahren eingesetzt werden können.

Aus EP-B-0647657 ist bereits bekannt, daß man die Polymerisation von konjugierten Dienen, insbesondere von Butadien ohne Zusatz von Lösungsmitteln in der Gasphase durchführen kann, indem man ein Katalysatorsystem auf der Basis von Verbindungen der Seltenen Erden und einer aluminiumorganischen Verbindung auf einem teilchenförmigen, inerten, anorganischen Feststoff mit einer spezifischen Oberfläche größer als 10 m²/g (BET) und mit einem Porenvolumen von 0,3 bis 15 ml/g verwendet.

Die beschriebenen Katalysatorsysteme stellen klassische Ziegler-Systeme dar, für die in der Literatur zahlreiche Methoden zur Heterogenisierung allgemein beschrieben sind.

Es war daher Aufgabe der vorliegenden Erfindung, ein allgemein anwendbares Verfahren zur ionischen Polymerisation von Monomeren in Gasphasen- oder Suspensionsverfahren bereitzustellen, um die spezifischen Nachteile von Lösungsverfahren auf diese Weise zu vermeiden.

Die Aufgabe wird erfindungsgemäß durch den Einsatz geträgerter polymerisationsinitiierender Systeme bestehend aus
a) einer oder mehreren Komponenten, die eine ionische Polymerisation initiieren und starten,
b) einem Träger, auf den die polymerisationsinitiierende Komponente aufgebracht wird,
   und
c) gegebenenfalls einem oder mehreren Modifiern, die einen Einfluß auf die Reaktionskinetik und/ oder die Produkteigenschaften haben,
gelöst.

Die Trägerung der polymerisationsauslösenden Stoffe, nachfolgend Initiator genannt, erfolgt vorzugsweise durch Aufbringen dieser Stoffe oder mehrerer Initiatorkomponenten gelöst in einer flüssigen Phase auf ein poröses Trägermaterial.

Eine weitere bevorzugte Ausführungsform betrifft die gleichzeitige Immobilisierung von Initiatoren und polymerisationsbeeinflussenden sowie produktmodifizierenden Stoffen, nachfolgend Modifier genannt.

Bevorzugt erfolgt die Trägerung indem ein Lösungsmittel oder Lösungsmittelgemisch das den Initiator oder die Initiatorkomponenten gelöst enthält, mit einem porösen Trägermaterial in Kontakt gebracht wird, wobei das Trägermaterial inert gegenüber dem Initiator bzw. den Initiatorkomponenten ist und wobei das Lösungsmittel oder das Lösungsmittelgemisch vorzugsweise vollständig vom Träger entfernt werden kann oder besonders bevorzugt das Volumen des Lösungsmittels oder des Lösungsmittelgemisches, das auf dem Trägermaterial verbleibt, kleiner oder gleich dem Porenvolumen des verwendeten Trägermaterials ist. In einer weiteren bevorzugten Ausführungsform werden der Initiator oder die Initiatorkomponenten in gelöster Form auf einen Träger aufgebracht und durch Zusatz geeigneter Fällungsmittel auf dem Träger ausgefällt und somit in fester Form gleichmäßig auf dem Träger abgeschieden.

Vorzugsweise vor, während und gegebenenfalls nach dem Auftragen der Initiatorlösung wird der Feststoff bewegt, z.B. in einem Rührkessel mit einem konventionellen Rühraggregat wie z.B. einem Kreuzbalkenrührer oder einem Wendelrührer, oder in einer weiteren bevorzugten Form in einem Pflugscharmischer.

In einer weiteren bevorzugten Ausführungsform erfolgt die Imprägnierung des Trägermaterials mit Initiatorlösung in einem Wirbelbett. Dabei wird auf das Trägermaterial, das durch einen Inertgasstrom fluidisiert wird, die Wirkstofflösung aufgebracht, z.B. durch Versprühen mittels einer Düse. Über einen internen Kreislauf kann das Inertgas, nachdem es von mittransportiertem Lösungsmittel befreit wurde, in den Reaktor zurückgeführt werden. Das inerte Lösungsmittel wird bevorzugt zur Zubereitung der Wirkstofflösung wiederverwendet. Das erfindungsgemäße Verfahren kann vorteilhafterweise auch kontinuierlich durchgeführt werden. Des weiteren ist es vorteilhaft, durch Variation der zudosierten Menge an Initiatorlösung und gegebenenfalls Modifierlösung das Wirksamkeitsniveau des Initiatorsystems gezielt zu steuern.

Die Herstellung des geträgerten Initiatorsystems kann in einem weiten Temperaturbereich erfolgen. Bevorzugt liegt die Temperatur zwischen Schmelz- und Siedepunkt des inerten Lösungsmittels bzw. der inerten Lösungsmittel. Bevorzugt wird bei Temperaturen von -20 bis 100°C, besonders bevorzugt 20 bis 40°C, gearbeitet.

Im Anschluß an die Imprägierung des Trägermaterials mit Wirkstofflösung werden in einer bevorzugten Ausführungsform das inerte Lösungsmittel bzw. die inerten Lösungsmittel destillativ vollständig oder so weit entfernt, daß das Volumen des verbleibenden Lösungsmittel bzw. der verbleibenden Lösungsmittel kleiner oder gleich dem Porenvolumen des verwendeten Trägermaterials ist.

Die Destillation kann sowohl in dem gleichen Behälter, in dem auch die Imprägnierung durchgeführt wurde, als auch in einer separaten Apparatur, z.B. einem Wirbelschichttrockner, erfolgen. Bei der Entfernung des Lösungsmittels bzw. der Lösungsmittel muß der Zutritt von Luft und Feuchtigkeit vermieden werden. Die Destillation wird je nach verwendetem Lösungsmittel bei Temperaturen von 0 bis 150°C, vorzugsweise bei 10 bis 70°C, und Drücken von 0,001 mbar bis 100 bar absolut, vorzugsweise 0,001 mbar bis 20 bar, besonders bevorzugt 0,1 mbar bis Normaldruck, durchgeführt. Die Destillation kann auch kontinuierlich durchgeführt werden. Das unter Inertbedingungen aufgefangene Kondensat kann vorteilhaft ohne weitere Aufarbeitung als Lösungsmittel für die in der Imprägnierung eingesetzten Wirkstoffe wiederverwendet werden.

Bei dem erfindungsgemäßen Verfahren können alle porösen, in dem verwendeten Lösungsmittel oder den verwendeten Lösungsmittelgemischen formstabilen, inerten Trägermaterialien mit ausreichend hohem Porenvolumen, Oberfläche und Teilchengröße eingesetzt werden. Als Trägermaterialien eignen sich teilchenförmige organisehe oder anorganische Feststoffe, deren Porenvolumen zwischen 0,1 und 15 ml/g beträgt bevorzugt zwischen 0,25 und 5 ml/g, deren spezifische Oberfläche größer als 1 ist, bevorzugt 10 bis 1 000 m²/g (BET) und deren Korngröße zwischen 10 und 2 500 µm beträgt, bevorzugt zwischen 50 und 1 000 µm. In einer bevorzugten Ausführungsform können auch Mischungen unterschiedlicher Trägermaterialien verwendet werden.

Die spezifische Oberfläche wird in üblicher Weise bestimmt nach Brunauer, Emmet und Teller, J. Amer. Chem. Soc. 1938, 60, 309, das Porenvolumen durch die Zentrifugationsmethode nach McDaniel, J. Colloid Interface Sci. 1980, 78, 31 und die Teilchengröße nach Cornillaut, Appl. Opt. 1972, 11, 265.

Unter inert wird in diesem Fall verstanden, daß die Feststoffe bzw. Trägermaterialien so beschaffen sind bzw. durch eine Vorbehandlung, bspw. durch Trocknen, so vorbehandelt werden, daß die Bildung eines polymerisationsinitiierenden Stoffes nicht behindert bzw. keine unerwünschten Reaktionen mit dem Monomeren stattfinden.

Als organische Feststoffe eignen sich pulverförmige, poröse polymere Materialien, bevorzugt in Form frei fließender Pulver, mit den obengenannten Eigenschaften. Beispielhaft seien genannt, ohne die vorliegende Erfindung einschränken zu wollen: Polyolefine, wie bspw. Polyethen, Polypropen, Polystyrol, Polystyrol-*co*-divinylbenzol, Polybutadien, Polyacrylnitril, Polyacrylate, wie beispielsweise Polymethylacrylat, Polymethylmethacrylat, Polyether, wie beispielsweise Polyethylenoxid, Polyoxytetramethylen, Polysulfide, wie beispielsweise Poly-*p*-phenylensulfid, oder Polyamide. Besonders geeignete Materialien sind Polypropylen, Polystyrol und Polyethylenoxid. Die genannten, organischen Feststoffe, die der obengenannten Spezifikation genügen und deshalb für die Verwendung als Trägermaterialien geeignet sind, werden beispielsweise näher beschrieben in Ullmanns Enzyklopädie der technischen Chemie, Band 19, S. 195 ff (Polypropylen), Band 19, S. 265 ff (Polystyrol) und Band 19, S. 31 ff (Polyethylenoxid).

Als anorganische Feststoffe seien beispielsweise genannt, ohne die vorliegende Erfindung jedoch einschränken zu wollen; Silicagele, Fällungskieselsäuren, Tone, Alumosilikate, Montmorillonit, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten anorganischen Feststoffe, die der obengenannten Spezifikation genügen und deshalb für die Verwendung als Trägermaterialien geeignet sind, werden beispielsweise näher beschrieben in Ullmanns Enzyklopädie der technischen Chemie, Band 21, S. 439 ff (Silicagele), Band 23, S. 311 ff (Tone), Band 14, S. 633 ff (Ruße) und Band 24, S. 575 ff (Zeolithe).

Als polymerisationsauslösende Stoffe können alle Polymerisationsinitiatorsysteme Verwendung finden, die in homogener oder heterogener Phase für die ionische Polymerisation ungesättigter Monomere geeignet sind. Derartige Initiatoren sind, ohne die vorliegende Erfindung einschränken zu wollen, bevorzugt ausgewählt aus der Gruppe der anionischen bzw. anionenbildenden Verbindungen oder Stoffgemische, wie beispielsweise aromatische Komplexe der Alkalimetalle, bevorzugt Naphthylnatrium, Alkalimetalle, bevorzugt Lithium, Natrium oder Kalium, Organolithiumverbindungen, bevorzugt Alkyllithiumverbindungen, besonders bevorzugt n-Butyllithium, *tert*.-Butyllithium, Methyllithium oder Fluorenyllithium, oder Organomagnesiumverbindungen, bevorzugt Grignard-Verbindungen, besonders bevorzugt Phenylmagnesiumbromid oder Butylmagnesiumbromid, oder Diorganomagnesiumverbindungen, besonders bevorzugt, Dibutylmagnesium, Dibenzylmagnesium oder Benzylpicolylmagnesium, und aus der Gruppe der kationischen bzw. kationenbildenden Verbindungen oder Stoffgemische, wie beispielsweise Brönsted-Säuren, bevorzugt Trifluoroessigsäure, Trichloroessigsäure, Schwefelsäure, Methansulfonsäure, Trifluoromethansulfonsäure Brönsted/Lewis-Säure-Mischungen, bevorzugt Wasser-Bortrifluorid, Wasser-Bortrichlorid, Wasser-Aluminiumchlorid, Wasser-Aluminiumbromid, Wasser-Zinntetrachlorid, Trichloroessigsäure-Zinntetrachlorid, Chlorwasserstoff-Bortrichlorid oder Chlorwasserstoff-Aluminiumtrichlorid, organische Kationen, bevorzugt Tritylkation oder Tropyliumkation, oder Oxocarbeniumionen-bildende Mischungen, bevorzugt Acetylchlorid-Silberhexafluoroantimonat oder Acetylchlorid-Silberperchlorat.

Die Initiatorsysteme werden bevorzugt rein oder in Form von Mischungen von zwei oder drei oder mehreren verschiedenen entweder kationischen oder anionischen Initiatorsystemen eingesetzt.

Als Lösungsmittel können alle Lösungsmittel eingesetzt werden, in denen die besagten Polymerisationsinitiatoren löslich sind und die inert gegenüber den Initiatorsystemkomponenten sind oder die Initiatorsystemkomponenten in ihrer Wirksamkeit nicht nachteilig beeinflußen. Geeignet sind insbesondere, ohne die vorliegende Erfindung einschränken zu wollen; aromatische Kohlenwasserstoffe, bevorzugt Benzol und alkyl- oder arylsubstituierte Benzolderivate, besonders bevorzugt Toluol, Xylol, Diisopropylbenzol, Butylbenzol, Hexylbenzol, Dodecylbenzol, oder 1,2,3,4-Tetrahydronaphthalin, lineare oder alkyl- oder arylsubstituierte aliphatische Kohlenwasserstoffe, bevorzugt acyclische Kohlenwasserstoffe, besonders bevorzugt Pentan, *iso*-Pentan, Hexan, Heptan, Octan, Nonan, Decan, Dodecan, Tetradecan, Hexadecan oder Eicosan, oder cyclische Kohlenwasserstoffe, besonders bevorzugt Cyclohexan, Methylcyclohexan oder Decahydronaphthalin, mono-, di- oder mehrfach halogen substituierte Kohlenwasserstoffe, bevorzugt Chlormethan, Dichlormethan, Chloroform, Chlorethan, Dichlorethan, Trichlorethan, Chlorbenzol, Dichlorbenzol, Brommethan, Dibrommethan, Bromoform, Brombenzol und Dibrombenzol.

Als Fällungsmittel können alle Flüssigkeiten eingesetzt werden, in welchen der Initiator oder die Initiatorkomponenten schwerlöslich oder unlöslich sind, und die inert gegenüber den Initiatorsystemkomponenten sind oder die Initiatorsystemkomponenten in ihrer Wirksamkeit nicht nachteilig beeinflußen. Als Fällungsmittel eignen sich insbesondere, ohne die vorliegende Erfindung einzuschränken; Wasser, Alkohole, bevorzugt Methanol, Ethanol, *iso*-Propanol, Butylalkohol oder Amylalkohol, Ketone, bevorzugt Aceton, 2-Butanon oder 3-Pentanon, aromatische Kohlenwasserstoffe, bevorzugt Benzol und substituierte Benzolderivate, besonders bevorzugt Toluol, Xylol, Diisopropylbezol, Butylbenzol, Hexylbenzol, Dodecylbenzol, oder 1,2,3,4-Tetrahydronaphthalin, aliphatische Kohlenwasserstoffe, bevorzugt acyclische Kohlenwasserstoffe, besonders bevorzugt Pentan, Hexan, Heptan, Octan, Nonan, Decan, Dodecan, Tetradecan, Hexadecan oder Eicosan, oder cyclische Kohlenwasserstoffe, besonders bevorzugt Cyclohexan, Methylcyclohexan oder Decahydronaphthalin.

Als Modifier können alle Stoffe verwendet werden, die auf die Kinetik der Polymerisationsreaktion und/oder auf den die Strukur des Polymeren bestimmenden Schritt der Polymerisatiorsreaktion Einfluß nehmen. Geeignet sind insbesondere, ohne die vorliegende Erfindung einschränken zu wollen, Ether, bevorzugt acyclische Ether, besonders bevorzugt Glykolether, Butoxyethoxyethan, oder Diphenoxyethan, cyclische Ether, besonders bevorzugt Tetrahydrofurane, Tetrahydropyrane, Alkylhydrofurfurylether, Oxolanylalkane, Dioxane oder Oxolanyldioxane, oder Acetale, weiterhin Amine, bevorzugt acyclische Amine, besonders bevorzugt Trimethylamin, Tetramethylethylendiamin oder Tetraethylethylendiamin, cyclische Amine, besonders bevorzugt Pyridin, Pyrimidin, Pyrrolidin, Morpholin, N-Methylmorpholin, Dipyridin oder Dipiperidinoethan, aromatische Kohlenwasserstoffe, besonders bevorzugt Triphenylmethan, Nitro- oder Nitrosoaromaten, besonders bevorzugt Nitrobenzol, Nitrotoluol oder Nitrosobenzol.

Die Erfindung betrifft auch den Einsatz des erfindungsgemäßen geträgerten ionischen Initiators bzw. Initiatorsystems in einem Verfahren zur Homo- oder Copolymerisation ein- oder mehrfach ungesättigter Monomere. Geeignete Monomere sind beispielsweise, ohne die vorliegende Erfindung einschränken zu wollen, bevorzugt einfach ungesättigte Monomere, besonders bevorzugt Styrol, Methylstyrol und Isobuten, oder ungesättigte funktionelle Monomere, besonders bevorzugt Acrylnitril, Methylmethacrylat, Acrylamid, Vinylether und konjugierte Diene, bevorgugt 1,3-Butadien, Isopren oder Chloropren, in Suspensions-Prozessen und in der Gasphase.

Diese Polymerisation erfolgt besonders bevorzugt, indem man die ein- oder mehrfach ungesättigten, nicht-konjugierten oder konjugierten Monomeren mit dem oben beschriebenen, erfindungsgemäßen geträgerten Initiator oder Initiatorsystemen gasförmig, flüssig in feiner Verteilung oder gelöst bzw. dispergiert in einem geeigneten Verdünnungsmittel in Berührung bringt. Den gasförmigen oder versprühten Monomeren können weitere Gase zugemischt werden, die entweder der Verdünnung, der Versprühung oder der Wärmeabführung dienen. Die Polymerisation kann bei Drücken von 0,001 bis 50 bar, bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 160°C, durchgeführt.

Die Polymerisation kann in jeder für eine Gasphasen- oder Suspensionspolymerisation geeigneten Apparatur bewerkstelligt werden. So kann z.B. ein Rührreaktor, ein Schlaufenreaktor, ein Drehreaktor oder ein Fließbettreaktor oder eine Kombination dieser Reaktortypen verwendet werden.

Durch die Polymerisation vorzugsweise in der Gasphase oder in Suspensionsverfahren können auch sehr hochmolekulare Polymere hergestellt werden, die mittels Lösungspolymerisation wegen der hohen Viskosität und der Möglichkeit von Übertragungsreaktionen durch das verwendete Lösungsmittel nur unter extrem hohem Aufwand zugänglich sind.

Die erhaltenen Polymerisate können gegebenenfalls auf übliche Weise compoundiert und vulkanisiert werden, wie beispielsweise näher in Encyclopedia of Polymer Science and Engineering, Vol. 4, S. 66 ff (Compoundierung) und Vol. 17, S. 666 ff (Vulkanisation) beschrieben wird. Bevorzugt werden zur Verbesserung der Hitze- und Lagerstabilität bekannte phenolische, aminische, schwefelhaltige oder phosphorhaltige Alterungsschutzmittel zugegeben. Diese sind z.B. in Ullmanns Enzyklopädie der techn. Chemie Band 8, S. 19 ff näher beschrieben.

Die nachfolgenden Beispiele sollen die vorliegende Erfindung zur Herstellung geträgerter polymerisationsinitiierender Systeme sowie die Durchführung damit initiierter Gasphasenpolymerisationen und -copolymerisationen darstellen, ohne diese jedoch auf die Beispiele einzuschränken.

### Beispiel 1

### Vorbehandlung des Trägermaterials für Polymerisationsinitiatorsysteme:

Als Trägermaterial für anionische Initiatorsysteme zur Butadien-Polymerisation wurde ein Polypropylen (Accurel EP100; Handelsprodukt der Akzo Nobel AG) mit einer Oberfläche nach BET von 50 m²/g verwendet. Das Porenvolumen beträgt 2,40 ml/g; die Partikeldurchmesser betragen zwischen 200 und 1000 µm.

Zudem wurde ein Polystyrol (Diaion HP20SS; Handelsprodukt der Supelco GmbH) als Trägermaterial verwendet. Diaion HP20SS hat eine Oberfläche nach BET von 500 m²/g und ein Porenvolumen von 1,30 ml/g; die Partikeldurchmessers betragen zwischen 75 und 150 µm.

Weiterhin wurde ein Polystyrol (BASF AG) mit einem mittleren Molekulargewicht M_{w} = 100000 g/mol verwendet, das in Form kompakter Kügelchen vorlag und nach dem Abkühlen in flüssigem Stickstoff in einer Kugelmühle fein gemahlen wurde. Die Partikelgröße des gemahlenen Polystyrols betrug zwischen 125 und 500 µm.

Vor dem Einsatz wurden jeweils 100 g der Trägermaterialien bei 0,01 mbar und Raumtemperatur getrocknet und anschließend unter Ausschluß von Luft und Feuchtigkeit abgefüllt.

### Initiatorpräparation:

### Beispiel 2a

### Herstellung eines Accurel-geträgerten n-Butyllithium-Initiatorsystems:

Allgemeine Hinweise: Das in Hexan-Lösung vorliegende n-Butyllithium sowie der fertig geträgerte Initiator sind sehr luft- und feuchtigkeitsempfindlich. Einwiegen, Reaktion und Abfüllen müssen in Schlenk-Arbeitstechnik unter striktem Ausschluß von Sauerstoff und Feuchtigkeit vorgenommen werden.

10 g gemäß Beispiel 1 vorgetrocknetes Accurel EP100 werden im 200 ml-Schlenkgefäß unter Schutzgas vorgelegt und unter Durchmischung mit einem Magnetrührer in 50 ml Hexan und 5 ml Tetradecan 10 min suspendiert. Eine Lösung von 1,92 g (30,0 mmol) n-Butyllithium in 12,0 ml Hexan wird innerhalb von 30 Minuten auf den Träger getropft. Die Innentemperatur soll 20 bis 30°C betragen. Nach der Beladung wird 90 Minuten bei 20°C nachgerührt und anschlies-send das Hexan bei 0,01 mbar und 20°C abdestilliert. Man erhält 15,7 g eines freifließenden, weißen Pulvers mit einer Beladung von 1,91 mmol n-BuLi pro 1 g Initiatormaterial.

### Beispiel 2b

### Herstellung eines Accurel-geträgerten BEE-modifizierten n-Butyllithium-Initiatorsystems:

Es gelten die gleichen allgemeinen Hinweise wie bei Beispiel 2a. Das Trägermaterial wird wie in Beispiel 1 beschrieben vorbehandelt.

10g vorbehandeltes Accurel EP100 werden im 200 ml-Schlenkgefäß unter Schutzgas vorgelegt, unter Durchmischung mit einem Magnetrührer in 50 ml Hexan und 5 ml Tetradecan 10 min suspendiert. Anschließend wird mit 1,46 g (10,0 mmol) Butoxyethoxyethan (BEE) in 17 ml Hexan versetzt und 20 Minuten gerührt. Eine Lösung von 1,92 g (30,0 mmol) n-Butyllithium in 12,0 ml Hexan wird innerhalb von 30 Minuten auf den Träger getropft; die Innentemperatur beträgt 20 bis 30°C. Nach der Beladung wird 90 Minuten bei 20°C nachgerührt und anschließend das Hexan bei 0,01 mbar und 20°C abdestilliert. Man erhält 17,2 g eines freifließenden, weißen Pulvers mit einer Beladung von 1,75 mmol n-BuLi/g Initiatormaterial.

### Beispiel 2c

### Herstellung eines Accurel-geträgerten n-Butyllithium-Initiatorsystems:

Es gelten die gleichen allgemeinen Hinweise wie bei Beispiel 2a. Das Trägermaterial wird wie in Beispiel 1 beschrieben vorbehandelt.

10 g vorbehandeltes Accurel EP100 werden im 200 ml-Schlenkgefäß unter Schutzgas vorgelegt und unter Durchmischung mit einem Magnetrührer in 70 ml Hexan und 5 ml Tetradecan 10 min suspendiert. Eine Lösung von 0,19 g (3,0 mmol) n-Butyllithium in 1 ml Hexan wird innerhalb von 30 Minuten auf den Träger getropft; die Innentemperatur soll 20 bis 30°C betragen. Nach der Beladung wird 90 Minuten bei 20°C nachgerührt und anschließend das Hexan bei 0,01 mbar und 20°C abdestilliert. Man erhält 15,7 g eines freifließenden, weißen Pulvers mit einer Beladung von 0,19 mmol n-BuLi/g Initiatormaterial.

### Beispiel 2d

### Herstellung eines Diaion HP20SS-geträgerten n-Butyllithium-Initiatorsystems:

Es gelten die gleichen allgemeinen Hinweise wie bei Beispiel 2a. Das Trägermaterial wird wie in Beispiel 1 beschrieben vorbehandelt.

10 g vorbehandeltes Diaion HP20SS werden im 200 ml-Schlenkgefäß unter Schutzgas vorgelegt und mit dem Magnetrührer intensiv durchmischt. Eine Lösung von 0,3 g (5,0 mmol) n-Butyllithium in 72 ml Hexan und 5 ml Tetradecan wird innerhalb von 30 Minuten auf den Träger getropft. Die Innentemperatur soll 20 bis 30°C betragen. Nach der Beladung wird 90 Minuten bei 20°C nachgerührt und anschließend das Hexan bei 0,01 mbar und 20°C abdestilliert. Man erhält 14,1 g eines freifließenden, weißen Pulvers, das eine Beladung von 0,35 mmol n-BuLi/g Initiatormaterial aufweist.

### Beispiel 2e

### Herstellung eines Accurel-geträgerten TEEDA-modifizierten n-Butyllithium-Initiatorsystems:

Es gelten die gleichen allgemeinen Hinweise wie bei Beispiel 2a. Das Trägermaterial wird wie in Beispiel 1 beschrieben vorbehandelt.

10 g vorbehandeltes Accurel EP100 werden im 200 ml-Schlenkgefäß unter Schutzgas vorgelegt, unter Durchmischung mit einem Magnetrührer in 50 ml Hexan und 5 ml Tetradecan 10 min suspendiert. Anschließend wird mit 1,72 g (10,0 mmol) N,N,N',N'-Tetraethylethylendiamin (TEEDA) in 17 ml Hexan versetzt und 20 Minuten gerührt. Eine Lösung von 1,92 g (30,0 mmol) n-Butyllithium in 12,0 ml Hexan wird innerhalb von 30 Minuten bei einer Innentemperatur von 20 bis 30°C auf den Träger getropft. Nach der Beladung wird 90 Minuten bei 20°C nachgerührt und anschließend das Hexan bei 0,01 mbar und 20°C abdestilliert. Man erhalt 17,2g eines freifließenden, weißen Pulvers mit einer Beladung von 1,75 mmol n-BuLi/g Initiatormaterial.

### Beispiel 2f

### Herstellung eines Accurel-geträgerten KtA/BEE-modifizierten n-Butyllithium-Initiatorsystems:

Es gelten die gleichen allgemeinen Hinweise wie bei Beispiel 2a. Das Trägermaterial wird wie in Beispiel 1 beschrieben vorbehandelt.

10 g vorbehandeltes Accurel EP100 werden im 200 ml-Schlenkgefäß unter Schutzgas vorgelegt und in 60 ml Hexan und 5 ml Tetradecan unter Durchmischung mit einem Magnetrührer 10 min suspendiert. Anschließend wird mit 0,37 g (2,5 mmol) Butoxyethoxyethan (BEE) und 0,03 g (0,2 mmol) Kalium-*tert*.-amylat (K*t*A) in 7,4 ml Hexan versetzt und 20 Minuten gerührt. Eine Lösung von 0,32 g (5,0 mmol) n-Butyllithium in 2,0 ml Hexan wird innerhalb von 10 Minuten zugetropft. Nach der Beladung wird 90 Minuten bei 20°C nachgerührt und anschließend das Hexan bei 0,01 mbar und 20°C abdestilliert. Es werden 14,5 g eines freifließenden, gelblichen Pulvers mit einer Beladung von 0,34 mmol n-BuLi/g Initiatormaterial erhalten.

### Beispiel 2g

### Herstellung eines Diaion HP20SS-geträgerten Phenyllithium-Initiatorsystems:

Es gelten die gleichen allgemeinen Hinweise wie bei Beispiel 2a. Das Trägermaterial wird wie in Beispiel 1 beschrieben vorbehandelt.

10 g vorbehandeltes Diaion HP20SS werden im 200 ml-Schlenkgefäß unter Schutzgas vorgelegt und unter Durchmischung mit einem Magnetrührer in 50 ml Hexan und 2,5 ml n-Tetradecan 10 min suspendiert. Eine Lösung von 0,21 g (2,5 mmol) Phenyllithium (PhLi) in 1,6 ml Cyclohexan wird zu dieser Suspension getropft; die Innentemperatur beträgt 25°C. Nach der Beladung wird 90 Minuten bei 25°C nachgerührt und anschließend das Hexan bzw. Cyclohexan bei 0,01 mbar und 20°C abdestilliert. Man erhält 14,0 g eines freifließenden, schwach gelben Pulvers mit einer Beladung von 0,18 mmol PhLi/g Initiatormaterial.

### Beispiel 2h

### Herstellung eines Accurel-geträgerten n-Butyllithium-Initiatorsystems:

Es gelten die gleichen allgemeinen Hinweise wie bei Beispiel 2a. Das Trägermaterial wird wie in Beispiel 1 beschrieben vorbehandelt.

10 g vorbehandeltes Accurel EP100 werden im 200 ml-Schlenkgefäß unter Schutzgas vorgelegt und in 75 ml Hexan suspendiert. Eine Lösung von 0,16 g (2,5 mmol) n-Butyllithium in 1,0 ml Hexan wird zu dieser Suspension getropft. Nach der Beladung wird 90 Minuten bei 20°C nachgerührt und bei 0,01 mbar und 20°C anschließend ein Hexanvolumen von 68,5 ml abdestilliert. Man erhält 15,0 g eines freifließenden, weißen Pulvers mit einer Beladung von 0,25 mmol n-BuLi/g Initiatormaterial.

### Beispiel 2i

### Herstellung eines Polystyrol-geträgerten n-Butyllithium-Initiatorsystems:

Es gelten die gleichen allgemeinen Hinweise wie bei Beispiel 2a. Das Trägermaterial wird wie in Beispiel 1 beschrieben vorbehandelt.

15 g Polystyrol (M_{w} = 100 000 g/mol) werden bei 25 °C in 150 ml Toluol gelöst. Zu dieser Lösung wird bei 25°C innerhalb von 30 min eine Lösung von 4,80 g (75,0 mmol) n-Butyllithium in 20,0 ml Hexan getropft; die Innentemperatur beträgt 30 bis 35°C. Nach der Beladung wird 90 Minuten bei 25°C nachgerührt und anschließend das Hexan und Toluol bei 0,01 mbar und 30°C abdestilliert; der Restgehalt an Toluol beträgt weniger als 10 Gew.-%. Man erhält 16,2 g eines verklebten, glasartigen, gelben Materials mit einer Beladung von 4,42 mmol n-BuLi/g Initiatormaterial.

### Polymerisationen:

### Beispiel 3a

### Polymerisation von Butadien:

Die Polymerisation wurde durchgeführt in einem liegenden 1-Liter-Büchi-Glasautoklaven, der mit auf einer horizontalen Rührwelle angebrachten wandgängigen Ankerrührern ausgestattet war. Vor Reaktionsbeginn wurde der Reaktor mit 1 bar Stickstoff beaufschlagt. 3,0 g eines Accurel-geträgerten Initiators, wie er anfangs beschrieben wurde, im Speziellen mit 0,18 mmol Butyllithium pro 1 g Material belegt, wurden mittels einer Schleuse in den Reaktor befördert. Die Reaktionstemperatur wurde über den Mantelkreislauf so eingeregelt, daß sich in der gerührten Schüttung eine Temperatur von 70°C einstellen konnte. Die Polymerisation wurde durch Eindosierung von vorgeheiztem, gasförmigen Butadien in den Reaktor gestartet, wobei ein Butadien-Partialdruck von 3 bar angefahren wurde. Zu Reaktionsstart stieg die Schüttungstemperatur trotz Mantel-Gegenkühlung auf etwa 75°C an, nach 10 Minuten konnte die Reaktion über den gesamten Verlauf isotherm bei 70°C gefahren werden. Der Versuch wurde in der Semi-Batch-Fahrweise durchgeführt, d.h. es wurde stets die in der Reaktion verbrauchte Butadienmenge nachdosiert, jedoch kein weiterer Initiator, und es wurde auch bis zum Versuchsende kein Produkt ausgeschleust. Das von Beginn an rasche Anwachsen der umgewältzen Schüttung konnte in dem Glasreaktor gut beobachtet werden, desweiteren ein stetiger Anstieg der Produkt-Korngröße von zunächst wenigen 100 µm im Durchmesser auf zuletzt mehr als 1 mm. Im Reaktionsverlauf kam es zu Partikel-Agglomerationen bzw. Verklebungen; eine Durchmischung der Reaktionsmasse war aufgrund der wandschabenden Eigenschaft der Ankerrührer aber nach wie vor möglich. Nach 2½ Stunden wurde der Versuch beendet.

Etwa 100 g Produkt wurden nach Abreaktion des noch im Reaktor befindlichen Restbutadiens und Demontage des Reaktors erhalten. Anschließend wurde es unverzüglich durch Einmischen von 1 g Stearinsäure und 1 g Vulkanox BKF (Bayer AG) auf der Walze stabilisiert. Das Produkt war glasklar und enthielt sichtbar die weißen Accurel-Trägerpartikel.

Die mittlere Reaktionsgeschwindigkeit des reagierenden Systems betrug in diesem Experiment etwa 15 kg BR/(mol BuLi × bar Butadien × h).

### Beispiel 3b

### Polymerisation von Butadien:

Die Polymerisation wurde durchgeführt wie in Beispiel 3a, jedoch wurden diesmal 1,71 g eines Accurel-geträgerten Initiators, wie er anfangs beschrieben wurde, im Speziellen mit 1,91 mmol BuLi/g Material belegt, eingesetzt. Über den Mantelkreislauf wurde eine Reaktionstemperatur von 60°C eingestellt; der Butadien-Partialdruck betrug 3 bar.

Im Reaktionsverlauf kam es zu Verklebungen; eine Durchmischung der Reaktionsmasse war aufgrund der wandschabenden Eigenschaft der Ankerrührer aber nach wie vor möglich. Nach Beendigung des Versuches und nach Abreaktion des noch im Reaktor befindlichen Restbutadiens wurden 52 g Produkt erhalten Anschließend wurde es durch Einmischen von 0,5 g Stearinsäure und 0,5 g Vulkanox BKF stabilisiert. Das Produkt war glasklar und enthielt sichtbar die weißen Accurel-Trägerpartikel.

### Beispiel 3c

### Polymerisation von Butadien:

Die Polymerisation wurde durchgeführt wie in Beispiel 3a, jedoch wurden diesmal 1,79 g eines Diaion HP20SS-geträgerten Initiators, wie er anfangs beschrieben wurde, im Speziellen mit 0,36 mmol BuLi/g Material belegt, mittels der Schleuse in den Reaktor befördert. Es wurden 3,5 bar Butadienpartialdruck und 75°C als Reaktionsbedingungen gewählt. Im Laufe dieses Versuches wurde keine Partikelagglomeration beobachtet; das zu Reaktionsbeginn leicht rührbare feinteilige Festbett wuchs im Laufe der Reaktion körnig und ohne Verklebungsneigung an. Nach 2 Stunden wurde der Versuch beendet. 76 g Produkt wurden nach Abreaktion des noch im Reaktor befindlichen Restbutadiens und Öffnen des Reaktors erhalten und anschließend unverzüglich durch Einmischen von 0,75 g Stearinsäure und 0,75 g Vulkanox BKF auf der Walze abgestoppt und stabilisiert. Das körnige Produkt war weiß, vermutlich aufgrund des stark aufgespaltenen Polystyrolträgers. Die mittlere Reaktionsgeschwindigkeit des reagierenden Systems betrug in diesem Experiment etwa 17kg BR/(mol BuLi × bar Butadien × h).

### Beispiel 3d

### Polymerisation von Butadien:

Die Polymerisation wurde durchgeführt wie in Beispiel 3a, jedoch wurden diesmal 1,89 g eines Accurel-geträgerten Initiators, wie er anfangs beschrieben wurde, im Speziellen mit 1,75 mmol BuLi/g und 0,6 mmol Butoxyethoxyethan (BEE)/g Material belegt eingesetzt. Es wurde bei 3 bar Butadienpartialdruck und 60°C Reaktionstemperatur gearbeitet. Im Reaktionsverlauf kam es zu Partikel-Agglomerationen bzw. Verklebungen; eine Durchmischung der Reaktionsmasse war aber nach wie vor möglich. Nach Beendigung des Versuches und nach Abreaktion des noch im Reaktor befindlichen Restbutadiens wurden 135 g Produkt erhalten und anschließend stabilisiert.

### Beispiel 3e

### Polymerisation von Butadien:

Die Polymerisation wurde durchgeführt wie in Beispiel 3a, jedoch wurden diesmal 5,04 g eines Accurel-geträgerten Initiators, wie er anfangs beschrieben wurde, im Speziellen mit 0,34 mmol BuLi/g und 0,31 mmol N,N,N',N'-Tetraethylethylendiamin (TEEDA)/g Material belegt, eingesetzt. Es wurde bei 3 bar Butadienpartialdruck und 65°C Reaktionstemperatur gearbeitet. Im Reaktionsverlauf kam es zu Partikel-Agglomerationen bzw. Verklebungen; eine Durchmischung der Reaktionsmasse war aber nach wie vor möglich. 125 g Produkt wurden nach Reaktionsabbruch und Öffnen des Reaktors erhalten und anschließend stabilisiert.

### Beispiel 3f

### Copolymerisation von Butadien und Styrol:

Prinzipiell erfolgte die Durchführung wie in Beispiel 3a, jedoch wurde zusätzlich über eine in den Reaktor eingebaute Düse eine definierte Styrol-Menge kontinuierlich flüssig in das Reaktionsvolumen eingespeist. Durch die feine Verdüsung war es möglich, das anwachsende Partikelmaterial relativ homogen mit dem dosierten Styrol zu benetzen.

Es wurden 2,03 g eines Accurel-geträgerten Initiators, wie er anfangs beschrieben wurde, im Speziellen mit 1,91 mmol BuLi/g Material belegt, eingesetzt. Es wurde bei 3 bar Butadienpartialdruck und 60°C Reaktionstemperatur gearbeitet. Gemessen an der dosierten Butadienmenge wurden 15 Gew.-% monomeres Styrol in den Reaktionsraum eingedüst. Im Reaktionsverlauf kam es zu Verklebungen; eine Durchmischung der Reaktionsmasse war aber nach wie vor möglich. 35 g Produkt wurden nach Abbruch des Versuches und nach Abreaktion des noch im Reaktor befindlichen Restbutadiens und Öffnen des Reaktors erhalten und anschließend stabilisiert. Bei dem Produkt handelte es sich um ein leicht trübes, gelbliches Material. Mittels IR-Spektroskopie wurde ein Anteil von ca. 13 Gew.-% Styrol im hergestellten SBR bestimmt, wobei das Polymere nicht blockartig aufgebaut war.

### Beispiel 3g

### Copolymerisation von Butadien und Styrol:

Die Polymerisation wurde durchgeführt wie in Beispiel 3f, jedoch wurden bezüglich der dosierten Butadienmenge 45 Gew.-% monomeres Styrol kontinuierlich in den Reaktionsraum eingedüst. Im Reaktionsverlauf kam es zu Verklebungen; eine Durchmischung der Reaktionsmasse war aber nach wie vor möglich. 47 g Produkt wurden nach Abbruch des Versuches und nach Abreaktion des noch im Reaktor befindlichen Restbutadiens und Öffnen des Reaktors erhalten und anschließend stabilisiert. Bei dem Produkt handelte es sich um ein leicht trübes, gelbliches Material. Mittels IR-Spektroskopie wurde ein Anteil von ca. 40 Gew.-% Styrol im hergestellten SBR bestimmt, wobei das Polymere nicht blockartig aufgebaut war.

### Beispiel 3h

### Copolymerisation von Butadien und Styrol:

Prinzipiell erfolgte die Durchführung wie in den Beispielen 3a und 3f beschrieben; über eine in den Reaktor eingebaute Düse wurde kontinuierlich eine definierte Styrolmenge flüssig in das Reaktionsvolumen eingespeist. Es wurden 9,08 g eines Accurel-geträgerten Initiators eingesetzt, wie er anfangs beschrieben wurde; im Speziellen mit 0,34 mmol BuLi/g, 0,014 K*t*A/g und 0,17 BEE/g Material belegt. Es wurde bei 2 bar Butadienpartialdruck und 60°C Reaktionstemperatur gearbeitet. Relativ zur dosierten Butadienmenge wurden 45 Gew.-% monomeres Styrol in den Reaktionsraum eingedüst. Im Verlauf der Reaktion kam es zu geringen Verklebungen; eine Durchmischung der Reaktionsmasse war aber nach wie vor möglich. 90 g Produkt wurden nach Abbruch des Versuches und Abreaktion des noch im Reaktor befindlichen Restbutadiens und nach Öffnen des Reaktors erhalten und im Anschluß stabilisiert. Bei dem Produkt handelte es sich um ein leicht trübes, gelbliches Material. Mittels IR-Spektroskopie wurde ein Anteil von ca. 31 Gew.-% Styrol im hergestellten SBR bestimmt; das Polymere war nicht blockartig aufgebaut.

### Beispiel 3i

### Copolymerisation von Butadien und Isopren:

Prinzipiell erfolgte die Durchführung wie in Beispiel 3a beschrieben; in den Reaktor wurde kontinuierlich eine definierte Mischung von Butadien und Isopren in das Reaktionsvolumen eingespeist. Es wurden 10,29 g eines Accurel-geträgerten Initiators eingesetzt, der mit 1,91 mmol BuLi/g Material belegt war, und bei 1 bar Butadienpartialdruck und 60°C Reaktionstemperatur gearbeitet; relativ zur dosierten Butadienmenge wurden 25 Gew.-% Isopren eingesetzt. Im Verlauf der Reaktion kam es zu Verklebungen; eine Durchmischung der Reaktionsmasse war aber nach wie vor möglich. Nach Abbruch des Versuches, nach Abreaktion der noch im Reaktor befindlichen Restmonomeren und Öffnen des Reaktors wurden 50 g Produkt erhalten und stabilisiert. Bei dem Produkt handelte es sich um ein farbloses Material. Mittels NMR-Spektroskopie wurde ein Anteil von ca. 27 Gew.-% Isopren im hergestellten BIR bestimmt; das Polymere war nicht blockartig aufgebaut und wies folgende Mikrostrukur auf: *cis*-Butadien 29 Gew.-%, *trans*-Butadien 46 Gew.-%, 1,2-Butadien 25 Gew.-%, *cis*-Isopren 22 Gew.-%, *trans*-Isopren 56 Gew.-%, 3,4-Isopren 22 Gew.-%.

### Beispiel 3k

### Polymerisation von Isopren:

Prinzipiell erfolgte die Durchführung wie in Beispiel 3a. Über eine in den Reaktor eingebaute Düse wurde kontinuierlich eine definierte Isopren-Menge in das Reaktionsvolumen eingespeist; Butadien wurde nicht eingesetzt. Es wurden 3,43 g eines Accurel-geträgerten Initiators eingesetzt, wie er anfangs beschrieben wurde, im Speziellen mit 1,91 mmol BuLi/g Initiatormaterial belegt. Es wurde bei 1,5 bar Isoprenpartialdruck und 70°C Reaktionstemperatur gearbeitet. Im Verlauf der Reaktion kam es zu Verklebungen; eine Durchmischung der Reaktionsmasse war jedoch möglich. Nach 2 Stunden und nach anschließender Abreaktion des noch im Reaktor befindlichen Isoprens und Öffnen des Reaktors wurden 88 g Produkt erhalten und nachfolgend stabilisiert. Bei dem Produkt handelte es sich um ein klares, farbloses Material, dessen Struktureinheiten laut NMR-spektroskopischer Analyse folgendermaßen verteilt waren: *trans*-Anteil 28 Gew.-%, *cis*-Anteil 62 Gew.-%, 1,2-Anteil 2 Gew.-% und 3,4-Anteil 8 Gew.-%.

### Beispiel 3l

### Copolymerisation von Butadien und Butylacrylat:

Prinzipiell erfolgte die Durchführung wie in Beispiel 3a, jedoch wurde zusätzlich über eine in den Reaktor eingebaute Düse eine definierte Butylacrylat-Menge kontinuierlich flüssig in das Reaktionsvolumen eingespeist. Durch die feine Verdüsung war es möglich, das anwachsende Partikelmaterial relativ homogen mit dem dosierten Butylacrylat zu benetzen. Es wurden 4,38 g eines Accurel-geträgerten Initiators, wie er anfangs beschrieben wurde, im Speziellen mit 1,91 mmol BuLi/g Initiatormaterial belegt, eingesetzt. Es wurde bei 2 bar Butadienpartialdruck und 60°C Reaktionstemperatur gearbeitet. Gemessen an der dosierten Butadienmenge wurden 5 Gew.-% Butylacrylat in den Reaktionsraum eingedüst. Im Reaktionsverlauf kam es zu Verklebungen; eine Durchmischung der Reaktionsmasse war aber nach wie vor möglich Nach dem Abbruch des Versuches und nach Abreaktion des noch im Reaktor befindlichen Butadiens und Öffnen des Reaktors wurden 51 g Produkt erhalten und anschließend stabilisiert. Bei dem Produkt handelte es sich um ein klares, farbloses Material, dessen Comonomeranteil NMR-spektroskopisch bestimmt wurde und ca. 5 Gew.-% an Butylacrylat betrug; das Polymere war dabei nicht blockartig aufgebaut.

### Beispiel 3m

### Polymerisation von Butadien:

Die Polymerisation wurde durchgeführt, wie in Beispiel 3a beschrieben; jedoch wurden in diesem Beispiel 13,28 g eines auf Diaion HP20SS geträgerten Initiators eingesetzt, wie er in Beispiel 2g beschrieben wurde, im Speziellen mit 0,18 mmol PhLi/g Material belegt. Es wurden 2 bar Butadienpartialdruck und 60°C als Reaktionsbedingungen gewählt. Im Reaktionsverlauf kam es zu Verklebungen; eine Durchmischung der Reaktionsmasse war aber nach wie vor möglich. Nach 4 Stunden wurde der Versuch beendet und 135 g Produkt nach Abreaktion des noch im Reaktor befindlichen Restbutadiens und Öffnen des Reaktors erhalten. Anschließend wurde das körnige, leicht verklebte, farblose Produkt unverzüglich abgestoppt und stabilisiert.

### Beispiel 3n

### Polymerisation von Butadien:

Die Polymerisation wurde durchgeführt wie in Beispiel 3a) beschrieben; es wurden 7,83 g eines Accurel-geträgerten Initiators eingesetzt, wie er in Beispiel 2h) beschrieben wurde, mit 0,25 mmol BuLi/g und 0,54 ml n-Hexan/g Material belegt. Es wurde bei 1,5 bar Butadienpartialdruck und 65°C Reaktionstemperatur gearbeitet. Im Reaktionsverlauf kam es zu Partikelagglomerationen; eine Durchmischung der Reaktionsmasse war aber nach wie vor möglich. 75 g eines farblosen, leicht verklebten Produktes wurden nach Abbruch der Reaktion und Öffnen des Reaktors erhalten und im Anschluß stabilisiert.

### Beispiel 3o

### Polymerisation von Butadien in Gegenwart von Ruß:

Die Polymerisation wurde durchgeführt wie in Beispiel 3a beschrieben; es wurden 5,22 g eines Accurel-geträgerten Initiators, mit 1,91 mmol BuLi/g Material belegt, und 5,11 g mit Ruß (Degussa N 326MP) eingesetzt. Es wurde bei 4 bar Butadienpartialdruck und 70°C Reaktionstemperatur gearbeitet. Im Reaktionsverlauf kam es aufgrund des zugesetzten Pudermittels zu keinerlei Partikelverklebungen; eine Durchmischung der Reaktionsmasse war problemlos möglich. Nach 4 Stunden wurde die Dosierung von Butadien gestoppt, und nach Abreaktion des Restmonomers und nach dem Öffnen des Reaktors wurden 52 g BR isoliert, das anschließend stabilisiert wurde.

### Beispiel 3p

### Polymerisation von Butadien in Gegenwart von inertisiertem Silica:

Die Polymerisation wurde durchgeführt wie in Beispiel 3a beschrieben; es wurden 1,80 g eines Accurel-geträgerten Initiators, mit 1,91 mmol BuLi/g Material belegt, und 5,01 g mit DIBAH-inertisiertes Kieselgel (0,25 mmol Al/g Zeosil 1165MP) eingesetzt. Es wurde bei 4 bar Butadienpartialdruck und 70°C Reaktionstemperatur gearbeitet. Im Reaktionsverlauf kam es aufgrund des zugesetzten Pudermittels zu keiner Partikelverklebung; eine Durchmischung der jederzeit körnigen Reaktionsmasse war problemlos möglich. Nach 5 Stunden wurde die Dosierung von Butadien gestoppt, und nach Abreaktion des Restmonomers und nach dem Öffnen des Reaktors und Stabilisieren des Produktes wurden 85 g BR isoliert.

### Beispiel 3q

### Polymerisation von Butadien in Gegenwart von Polystyrol:

Die Polymerisation wurde durchgeführt wie in Beispiel 3a) beschrieben; es wurden 1,94 g eines Accurel-geträgerten Initiators, mit 1,91 mmol BuLi/g Material belegt, und 4,90 g Diaion HP20SS (Supelco) eingesetzt. Es wurde bei 2 bar Butadienpartialdruck und 65°C Reaktionstemperatur gearbeitet. Im Reaktionsverlauf kam es trotz des zugesetzten Pudermittels zu einer Partikelagglomeration; eine Durchmischung der Reaktionsmasse war jedoch nach wie vor möglich. Nach 5 Stunden wurde die Dosierung von Butadien gestoppt, nach Abreaktion des Restmonomers und nach dem Öffnen des Reaktors und Stabilisieren des Produktes wurden 90 g BR isoliert.

### Beispiel 3r

### Polymerisation von Butadien:

Die Polymerisation wurde durchgeführt wie in Beispiel 3a beschrieben; es wurden 5,12 g eines auf Polystyrol geträgerten Initiators, wie er in Beispiel 2i beschrieben wurde und mit 4,42 mmol BuLi/g Material belegt, mittels der Schleuse in den Reaktor befördert. Es wurden ein Butadienpartialdruck von 3 bar und eine Temperatur von 65°C als Reaktionsbedingungen gewählt. Im Laufe dieses Versuches kam es zu Partikelverkebungen; das im Reaktor befindliche Festbett wuchs im Laufe der Reaktion an, die nach 4 Stunden beendet wurde. 100 g Produkt wurden nach Abreaktion des noch im Reaktor befindlichen Restbutadiens und Öffnen des Reaktors erhalten und anschließend unverzüglich stabilisiert. Das farblose, verklebte Produkt war in Toluol vollständig löslich.

Durch die Wahl der Reaktionsbedingungen (siehe auch Beispiele 3a-r) kann die Mikrostruktur der Produkte eingestellt werden, wie der folgenden Tabelle zu entnehmen ist. Bei Copolymeren beziehen sich jeweiligen *trans*-, *cis*- und *vinyl*-Anteile auf den reinen Butadienanteil:

| Beispiel | *trans*-Anteil [Gew.-%] | *cis*-Anteil [Gew.-%] | *vinyl*-Anteil [Gew.-%] | Comonomer-Anteil [Gew.-%] |
|---|---|---|---|---|
| 3a) | 46 | 42 | 12 | -- |
| 3b) | 45 | 32 | 23 | -- |
| 3c) | 37 | 52 | 11 | -- |
| 3d) | 25 | 15 | 60 | -- |
| 3e) | 15 | 9 | 76 | -- |
| 3f) | 43 | 29 | 28 | 13 |
| 3g) | 43 | 29 | 28 | 40 |
| 3h) | 35 | 22 | 43 | 31 |
| 3i) | 46 | 29 | 25 | 27 |
| 3l) | 39 | 26 | 35 | 5 |
| 3m) | 44 | 38 | 18 | -- |
| 3n) | 49 | 38 | 13 | -- |
| 3o) | 44 | 42 | 14 | -- |
| 3p) | 32 | 57 | 11 | -- |
| 3q) | 48 | 32 | 20 | -- |
| 3r) | 48 | 33 | 19 | -- |

## Patentansprüche

1. Geträgertes polymerisationsinitiierendes System, bestehend aus
a) einer oder mehreren Komponenten, die eine ionische Polymerisation initiieren und starten,
b) einem Träger, auf den die polymerisationsinitiierende Komponente aufgebracht wird,
und
c) gegebenenfalls einem oder mehreren Modifiern, die einen Einfluß auf die Reaktionskinetik und/oder die Produkteigenschaften haben.

2. Geträgertes polymerisationsinitiierendes System nach Anspruch 1, dadurch gekennzeichnet, daß es sich bei der Komponente a) um anionische Initiatoren handelt.

3. Geträgertes polymerisationsinitiierendes System nach Anspruch 1 und 2, dadurch gekennzeichnet, daß es sich bei der Komponente a) um Organolithium, Organokalium- oder Organonatrium-Verbindungen handelt.

4. Geträgertes polymerisationsinitiierendes System nach Anspruch 1, dadurch gekennzeichnet, daß es sich bei der Komponente a) um kationische Initiatoren handelt.

5. Geträgertes polymerisationsinitiierendes System nach einem oder mehreren der Ansprüche 1 bis 4, dadurch gekennzeichnet, daß als Trägermaterial b) Silica, Zeolithe oder Ruß, ein Salz oder eine Mischung aus zwei oder mehreren dieser Komponenten eingesetzt wird.

6. Geträgertes polymerisationsinitiierendes System nach einem oder mehreren der Ansprüche 1 bis 4, dadurch gekennzeichnet, daß als Trägermaterial b) ein organischer Träger eingesetzt wird.

7. Geträgertes polymerisationsinitiierendes System nach einem oder mehreren der Ansprüche 1 bis 6, dadurch gekennzeichnet, daß als Modifier c) ein Ether eingesetzt wird.

8. Geträgertes polymerisationsinitiierendes System nach einem oder mehreren der Ansprüche 1 bis 6, dadurch gekennzeichnet, daß als Modifier c) ein Amin eingesetzt wird.

9. Geträgertes polymerisationsinitiierendes System nach einem oder mehreren der Ansprüche 1 bis 6, dadurch gekennzeichnet, daß als Modifier c) ein Alkyl- oder Arylderivat eingesetzt wird.

10. Verwendung eines geträgerten polymerisationsinitiierenden Systems nach einem oder mehreren der Ansprüche 1 bis 9 in einem, optional kontinuierlich geführten, Verfahren zur ionischen Suspensionspolymerisation.

11. Verwendung eines geträgerten polymerisationsinitiierenden Systems nach einem oder mehreren der Ansprüche 1 bis 9 in einem, optional kontinuierlich geführten, Verfahren zur ionischen Gasphasenpolymerisation.

12. Verwendung eines geträgerten polymerisationsinitiierenden Systems nach einem oder mehreren der Ansprüche 1 bis 11 in einem, optional kontinuierlich geführten, Verfahren zur Polymerisation von konjugierten Dienen.

13. Verwendung eines geträgerten polymerisationsinitiierenden Systems nach einem oder mehreren der Ansprüche 1 bis 11 in einem, optional kontinuierlich geführten, Verfahren zur Copolymerisation von verschiedenen konjugierten Dienen.

14. Verwendung eines geträgerten polymerisationsinitiierenden Systems nach einem oder mehreren der Ansprüche 1 bis 11 in einem, optional kontinuierlich geführten, Verfahren zur Copolymerisation von konjugierten Dienen mit weiteren Monomeren.

15. Verwendung eines geträgerten polymerisationsinitiierenden Systems nach einem oder mehreren der Ansprüche 1 bis 14 in einem Verfahren zur Copolymerisation von konjugierten Dienen mit weiteren Monomeren in der Gasphase, wobei diese Monomere wahlweise auch flüssig in die Reaktion eingespeist werden können.

16. Verwendung eines geträgerten polymerisationsinitiierenden Systems nach einem oder mehreren der Ansprüche 1 bis 15 in einem Verfahren zur Copolymerisation von konjugierten Dienen mit weiteren Monomeren in der Gasphase, wobei diese Monomere wahlweise auch in geträgerter Form in die Reaktion eingehen können.

17. Verwendung eines geträgerten polymerisationsinitiierenden Systems nach einem oder mehreren der Ansprüche 1 bis 16 in einem Verfahren zur Copolymerisation von konjugierten Dienen mit weiteren Monomeren in der Gasphase, wobei Agglomerationen bzw. Verklebungen im Reaktionsverlauf durch Wahl eines geeigneten Trägers nahezu vollständig bzw. vollständig vermieden werden.

18. Verwendung eines geträgerten polymerisationsinitiierenden Systems nach einem oder mehreren der Ansprüche 1 bis 17 in einem Verfahren zur Copolymerisation von konjugierten Dienen mit weiteren Monomeren in der Gasphase, wobei die Produkteigenschaften wie Mikrostruktur oder Strukturabfolge in Copolymeren durch geeignete Modifikatoren eingestellt werden können.

19. Verwendung eines geträgerten polymerisationsinitiierenden Systems nach einem oder mehreren der Ansprüche 1 bis 18 in einem Verfahren zur Copolymerisation von konjugierten Dienen mit weiteren Monomeren in der Gasphase, wobei Agglomerationen bzw. Verklebungen im Reaktionsverlauf durch Zugabe eines Puderungsmittels nahezu vollständig bzw. vollständig vermieden werden.

20. Verwendung der Produkte erhältlich nach einem oder mehreren der Ansprüche 1 bis 19 zur Herstellung von Produkten durch Extrusion oder Spritzguß.

21. Einsatz der Produkte erhältlich nach einem oder mehreren der Ansprüche 1 bis 19 in Compounds oder zur Herstellung eines Reifens.
